# FASCICULE DE BREVET EUROPEEN

(11) **EP 0 872 577 B1**
(45) Date de publication et mention de la délivrance du brevet: **03.09.2003**
(21) Numéro de dépôt: 98400889.6
(22) Date de dépôt: 10.04.1998
(51) Int. Cl.: C23F 13/16, C23F 13/14, F16F 1/02

(54) **Procédé pour la protection cathodique d'un dispositif de suspension**
Verfahren zum kathodischen Schutz einer Aufhängungsvorrichtung
Process for the cathodic protection of a suspension device

(30) Priorité: 14.04.1997 FR 9704537
(43) Date de publication de la demande: 21.10.1998
(73) Titulaire: ALLEVARD, F-92210 Saint-Cloud (FR)
(72) Inventeur: Duval, Philippe, 59552 Lambres LEs Douai (FR)
(74) Mandataire: Busnel, Jean-Benoît

(56) Documents cités:
- US-A- 3 464 906
- US-A- 3 948 686
- PATENT ABSTRACTS OF JAPAN vol. 095, no. 004, 31 mai 1995 & JP 07 003494 A (NIPPON STEEL CORP), 6 janvier 1995,

## Description

La présente invention concerne un procédé pour protéger contre la corrosion un dispositif de suspension automobile.

Les dispositifs de suspension pour véhicules automobiles comprennent généralement des ressorts hélicoïdaux dont les extrémités supérieure et inférieure sont en appui sur des coupelles.

Comme les ressorts et les coupelles d'appui sont généralement réalisés en acier non galvanisé, il se produit des phénomènes de corrosion à leur interface qui sont responsables de ruptures ou d'usures prématurées, en particulier, avec des ressorts à haute contrainte.

Ces phénomènes sont encore plus développés lorsque les coupelles et surtout les coupelles inférieures, sont pourvues d'un intercalaire en matériau élastomère qui retient des particules étrangères (gravillons, sel, sable...) provoquant des piqûres du métal et/ou un effet de pile.

Il existe déjà des solutions à ce problème qui consistent à fixer une anode consommable sur la coupelle ou à équiper les extrémités des ressorts avec une gaine en matière plastique.

Mais ces solutions ne sont pas économiques car elles requièrent des pièces rapportées qui génèrent des coûts de fabrication et de montage supplémentaires.

Le Patent Abstracts of Japan vol 095, n° 004 du 31 Mai 1995 et le JP 07003494A divulguent un dispositif de suspension automobile comprenant un ressort hélicoïdal ayant subi un traitement anticorrosion consistant à appliquer un revêtement de protection à base d'un métal à l'état divisé.

Dans le US-A-3948686, le métal à l'état divisé est sous forme de particules de zinc dispersées dans un liant et dans le US-A-3464906, ces particules sont recouvertes d'un matériau non polaire pour ralentir l'usure du revêtement.

Cependant, de tels revêtements sont susceptibles de produire, avec le métal du ressort, des phénomènes de pile qui s'accompagnent même parfois de dégagements d'hydrogène.

La présente invention a pour but de résoudre les problèmes techniques précédents de manière efficace et économique.

Ce but est atteint, conformément à l'invention, au moyen d'un procédé pour protéger contre la corrosion l'interface entre les aciers respectifs de l'extrémité d'un ressort hélicoïdal de suspension automobile et d'une coupelle sur laquelle il est en appui, caractérisé en ce qu'on applique sur au moins une portion de la spire d'extrémité du ressort et/ou de ladite coupelle, un revêtement contenant, au sein d'un liant, au moins 50% en poids d'au moins un métal à l'état divisé dont le potentiel électrochimique est inférieur à (-0,45V).

Selon un mode de mise en oeuvre particulier, ledit métal est du zinc et/ou de l'aluminium.

De préférence, préalablement au revêtement, on dépose une couche primaire d'accrochage et une couche de peinture formant barrière vis-à-vis des effets de pile.

Selon une caractéristique avantageuse, on applique ledit revêtement sur une portion comprise entre la moitié et les trois quarts de la spire d'extrémité du ressort.

Selon une autre caractéristique, on utilise un revêtement dans lequel ledit métal est sous forme de paillettes.

Un autre objet de l'invention est un dispositif de suspension pour véhicules automobiles du type comprenant notamment des ressorts hélicoïdaux en appui sur des coupelles, au moins une portion des spires d'extrémités des ressorts et/ou des coupelles étant pourvue d'un revêtement anticorrosion contenant, au sein d'un liant, au moins 50% en poids d'un métal à l'état divisé dont le potentiel électrochimique est inférieur à (-0,45 V), caractérisé en ce qu'il comporte sous le revêtement (R) une couche primaire (1) d'accrochage et une couche de peinture (2) formant barrière vis-à-vis des effets de pile.

Le procédé de l'invention assure une protection anodique efficace et durable de l'interface d'acier ressort/coupelle en utilisant des moyens simples et économiques et faciles à mettre en oeuvre.

L'invention permet, en outre d'utiliser des coupelles avec une garniture en caoutchouc assurant une bonne isolation phonique sans entraîner de problèmes de corrosion.

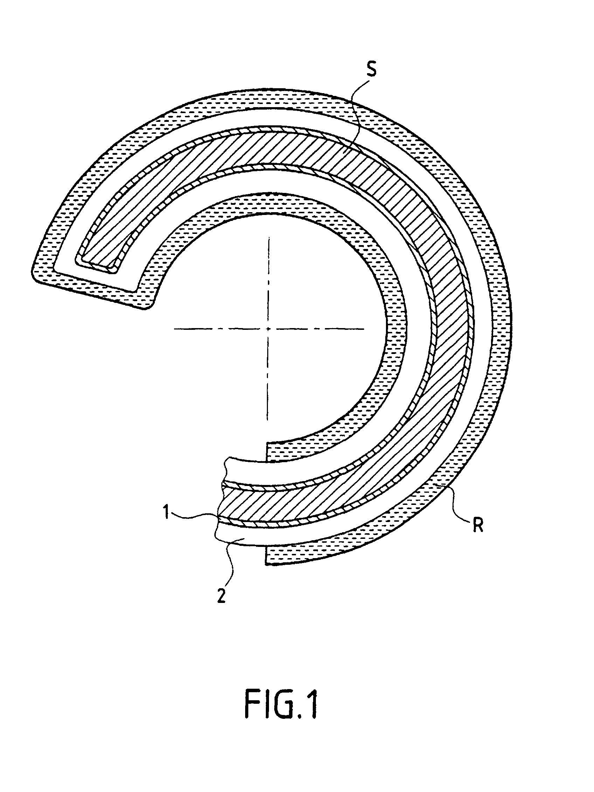

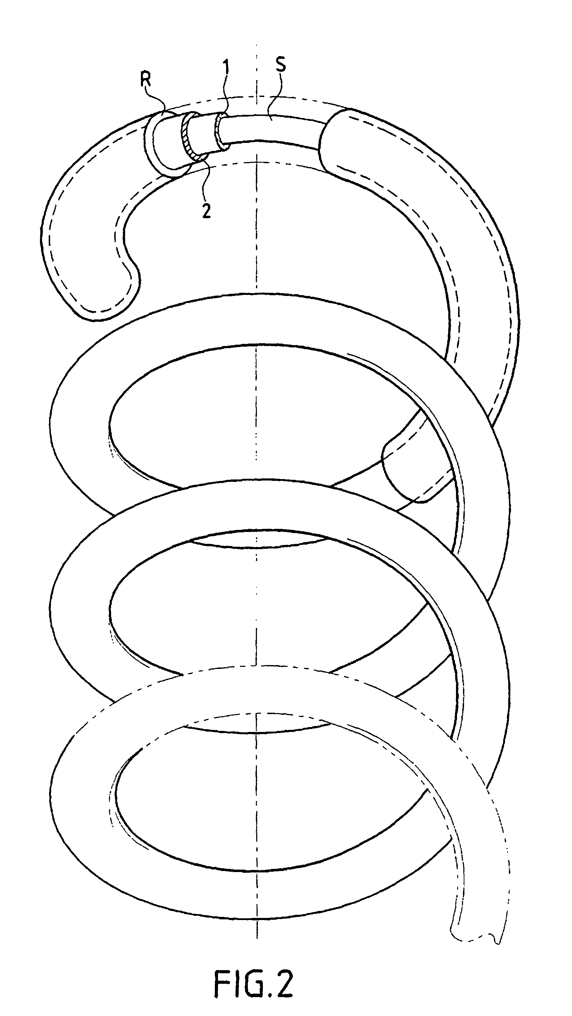

L'invention sera mieux comprise à la lecture de la description qui va suivre accompagnée des figures 1 et 2 représentant des vues partielles respectivement en coupe et en perspective éclatée des spires d'un ressort hélicoïdal selon l'invention.

Le procédé de l'invention est destiné à protéger, contre la corrosion, l'interface entre les aciers respectifs de l'extrémité d'un ressort hélicoïdal de suspension et d'une coupelle avec laquelle cette extrémité est en contact éventuellement d'appui.

Dans cet objectif, on applique sur au moins une portion de la spire d'extrémité S du ressort et /ou de la coupelle (non représentée), un revêtement R contenant au moins un métal à l'état divisé dont le potentiel électrochimique est inférieur à (- 0, 45V) qui est le potentiel le plus bas du fer.

De préférence, on applique ce revêtement sur des surfaces d'acier préalablement nettoyées ou décapées sur lesquelles on a déposé une sous-couche primaire 1 pour l'accrochage (composition à base de phosphate, amorphe ou cristalline contenant éventuellement une faible proportion de zinc) puis une couche de peinture 2 (peinture époxy ou cataphorèse) formant barrière pour éviter le contact direct entre l'acier et le métal du revêtement R susceptible de générer un effet de pile avec dégagement d'hydrogène. La couche de peinture 2 forme également une protection mécanique complémentaire vis-à-vis des agressions extérieures (projections de gravillons...).

De préférence, le revêtement R est très riche en métal et comprend, au sein d'un liant, au moins 50% en poids, par exemple, de zinc et/ou d'aluminium sous forme de particules telles que des paillettes ou des poudres.

Le revêtement R est préparé, de préférence, in situ par addition d'une fraction d'un solvant (xylène...) pour ajuster la viscosité et homogénéisation.

Le revêtement R est appliqué, par exemple, en trempant la spire d'extrémité du ressort et/ou la coupelle correspondante dans un bac rempli de la composition de revêtement R (mélange paillettes de métal et liant) puis en procédant au séchage dudit revêtement, éventuellement par chauffage.

Il est prévu de revêtir en priorité les portions de la spire d'extrémité du ressort et/ou de la coupelle qui sont en contact mutuel permanent et qui sont donc les plus exposées à la corrosion.

En pratique, cette portion est comprise entre la moitié et les trois quarts de la circonférence de ladite spire.

Le zinc et l'aluminium ont des potentiels électrochimiques respectivement de (- 0,81V) et (- 0,48V) qui sont inférieurs à celui du fer (-0,35V à -0,45V) qui est le constituant principal de l'acier.

Ainsi, lorsque le zinc et/ou l'aluminium sont mis en présence d'acier, ils jouent le rôle d'anode en formant des sources d'électrons, et sont alors corrodés à la place de l'acier.

Bien entendu, d'autre métaux (purs ou en alliages) dont les potentiels électrochimiques sont inférieurs à (-0,45V) peuvent convenir.

## Revendications

1. Procédé pour protéger contre la corrosion l'interface entre les aciers respectifs de l'extrémité d'un ressort hélicoïdal de suspension automobile et d'une coupelle sur laquelle il est en appui, comprenant l'application sur au moins une portion de la spire d'extrémité du ressort et/ou de ladite coupelle, d'un revêtement (R) contenant, au sein d'un liant, au moins 50% en poids d'au moins un métal à l'état divisé dont le potentiel électrochimique est inférieur à (-0,45V), **caractérisé en ce que** préalablement au revêtement (R), on dépose une couche primaire (1) d'accrochage et une couche de peinture (2) formant barrière vis-à-vis des effets de pile.

2. Procédé selon la revendication 1, **caractérisé en ce que** ledit métal est du zinc et/ou de l'aluminium.

3. Procédé selon l'une des revendications précédentes, **caractérisé en ce qu'**on applique ledit revêtement sur une portion comprise entre la moitié et les trois quarts de la spire d'extrémité du ressort.

4. Procédé selon l'une des revendications précédentes, **caractérisé en ce qu'**on utilise un revêtement dans lequel ledit métal est sous forme paillettes.

5. Dispositif de suspension pour véhicules automobiles du type comprenant notamment des ressorts hélicoïdaux en appui sur des coupelles, au moins une portion des spires d'extrémités des ressorts et/ou des coupelles étant pourvue d'un revêtement anticorrosion contenant, au sein d'un liant, au moins 50% en poids d'un métal à l'état divisé dont le potentiel électrochimique est inférieur à (-0,45 V), **caractérisé en ce qu'**il comporte sous le revêtement (R) une couche primaire (1) d'accrochage et une couche de peinture (2) formant barrière vis-à-vis des effets de pile.

6. Dispositif selon la revendication 5, **caractérisé en ce que** le métal dudit revêtement est constitué de zinc et/ou d'aluminium en paillettes.

## Patentansprüche

1. Verfahren zum Schützen der Grenzfläche zwischen den jeweiligen Stahlteilen des Endes einer zylindrischen Schraubenfeder zur Aufhängung bei einem Automobil und eines Federtellers, auf dem sie sich abstützt, gegen Korrosion, welches das Aufbringen einer Beschichtung (R) auf zumindest einen Teil der Endwindung der Feder und/oder des Federtellers umfasst, die in einem Bindemittel zumindest 50 Gewichtsprozent eines Metalls in kleinteiliger Form enthält, dessen elektrochemisches Potenzial kleiner als -0,45 V ist, **dadurch gekennzeichnet, dass** man vor dem Beschichten (R) eine Grundierungs-Haftschicht (1) und eine Farbschicht (2) aufträgt, welche gegenüber elektrochemischen Spannungseffekten eine Barriere bilden.

2. Verfahren nach Anspruch 1, **dadurch gekennzeichnet, dass** das Metall Zink und/oder Aluminium ist.

3. Verfahren nach einem der vorhergehenden Ansprüche, **dadurch gekennzeichnet, dass** man die Beschichtung auf einen Teil aufbringt, der sich über einen Bereich erstreckt, der zwischen der Hälfte und drei Vierteln der Endwindung der Feder liegt.

4. Verfahren nach einem der vorhergehenden Ansprüche, **dadurch gekennzeichnet, dass** man eine Beschichtung verwendet, in der das Metall in der Form von Schuppen vorliegt.

5. Vorrichtung für die Aufhängung für Automobilfahrzeuge von der Art, welche insbesondere zylindrische Schraubenfedern umfasst, die sich auf Federteller abstützen, wobei zumindest ein Teil der Endwindungen der Federn und/oder der Federteller mit einer Antikorrosionsbeschichtung versehen ist, die in einem Bindemittel zumindest 50 Gewichtsprozent eines Metalls in kleinteiliger Form ist, dessen elektrochemisches Potenzial kleiner als -0,45 V ist, **dadurch gekennzeichnet, dass** es unter der Beschichtung (R) eine Grundierungs-Haftschicht (1) und eine Farbschicht (2) umfasst, welche gegenüber elektrochemischen Spannungseffekten eine Barriere bilden.

6. Vorrichtung nach Anspruch 5, **dadurch gekennzeichnet, dass** das Metall der Beschichtung aus Zink- und/oder Aluminiumschuppen gebildet ist.

## Claims

1. Method for protecting from corrosion the interface between the respective steels of the end of a helicoidal automotive suspension spring and of a cup against which it bears, comprising the application to at least a portion of the end turn of the spring and/or of said cup, of a coating (R) that contains, within a binder, at least 50% by weight of at least one metal in the divided state, the electrochemical potential of which is lower than (- 0.45V), **characterised in that** prior to the coating (R), a fixing primary coat (1) and a coat of paint (2) forming a barrier to galvanic effects are deposited.

2. Method according to Claim 1, **characterised in that** said metal is zinc and/or aluminium.

3. Method according to one of the preceding claims, **characterised in that** said coating is applied to a portion comprised between half and three-quarters of the end turn of the spring.

4. Method according to one of the preceding claims, **characterised in that** use is made of a coating in which said metal is in the form of flakes.

5. Suspension device for motor vehicles of the type comprising, in particular, helicoidal springs bearing against cups, at least a portion of the end turns of the springs and/or cups being provided with an anticorrosive coating containing, within a binder, at least 50% by weight of a metal in the divided state, the electrochemical potential of which is lower than (-0.45 V), **characterised in that** it has, under the coating (R), a fixing primary coat (1) and a coat of paint (2) forming a barrier to galvanic effects.

6. Device according to Claim 5, **characterised in that** the metal of said coating is constituted by zinc and/or aluminium in flakes.
